# EUROPEAN PATENT APPLICATION

(11) **EP 4 080 404 A1**
(43) Date of publication of application: **26.10.2022**
(21) Application number: 21020231.3
(22) Date of filing: 23.04.2021
(51) Int. Cl.: G06K 9/00, G06K 9/62, G06N 20/00

(54) **HYPERSPECTRAL BASED TRAINING METHOD FOR ARTIFICIAL INTELLIGENCE BASED REMOTE SENSING DATA ANALYSES**

(71) Applicant: VISTA Geowissenschaftliche Fernerkundung GmbH, 80333 München (DE)
(72) Inventor: Bach, Heike, 80333 München (DE)
(74) Representative: Koepe, Gerd L.

(57) **Abstract**

The invention relates to a method of training Artificial Intelligence (AI) algorithms for remote sensing image analyses by hyperspectral earth land surface property data analyses, said method comprising the steps of
a. selecting an earth land surface property to be analysed;
b. subjecting the selected earth land property to unsupervised measurements of said property by using a hyperspectral image obtained from a defined area X of the earth land surface at a defined time Y by a remote sensing hyperspectral radiance measurement instrument;
c. converting the obtained hyperspectral radiance measurement data into at least one set of data of said selected property using the appropriate unsupervised retrieval algorithm using physical based retrieval methods, wherein each property data set i is further assigned a geographic location X*ᵢ* and time of observation Y*ᵢ* ;
d. using the at least one property data set obtained in step (c) as training data for training the AI algorithm for multispectral images or microwave images of the defined area X; and
e. applying the thus trained AI algorithm for the property to multispectral or microwave remote sensing data sets of a geographical area equal to, or larger than, the defined area X and for a time span equal to or larger than the defined time span Y.

The invention also relates to a use of hyperspectral earth land surface property data for training Artificial Intelligence (AI) algorithms to be applied to data obtained from remote sensing instruments in order to improve the instruments' performance in retrieving said property data.

## Description

The present invention relates to a method of training Artificial Intelligence (AI) algorithms for remote sensing data analyses. More particularly, the present invention relates to a method of training Artificial Intelligence (AI) algorithms for analysing remote sensing data by making use of analysing hyperspectral data.

The present invention also relates to a use of hyperspectral data analyses for training Artificial Intelligence (AI) algorithms for remote sensing image analyses.

Remote sensing data as offered by the Copernicus Programme of the EU, national space agencies and private companies are a common tool for mapping surface properties, particularly mapping land surface properties, of the earth and for monitoring land surface property changes with time. Land cover / land use changes are among the most prominent land surface properties. At present, the operation of remote sensing satellites as those of the Sentinel constellation providing multispectral optical or microwave data offers a global and regular monitoring of the earth's land surface properties every few days [htpps://sentinels.copernicus.eu/web/sentinel.home]. Many disciplines like agriculture, forestry, geology and soil sciences use remote sensing data as a central spatial information source.

Today's operational multispectral earth observation instruments, like the Sentinel constellation, use a discrete sample of a small number of spectrally relatively broad radiance measurements, while large parts of the spectrum of reflected or backscattered radiance from the earth's land surface are not sampled at all. On the other hand, these multispectral observation and measurement instruments cover the earth's whole land surface within days, thereby being able to globally observe rapid temporal changes of the land surface properties, which is essential for many application issues.

Artificial Intelligence (AI) is a widespread and fast developing method for information extraction from remotely sensed images of the earth's land surface [1]. A classification of the earth's land surface properties is the most common purpose for extracting information from such images. Class information may be land cover, land use, crop type, man-made surfaces or mineral mapping.

A classification is increasingly complemented by the retrieval and quantification of biophysical parameters of the earth's land surface. Such parameters cover, among others, albedo, leaf area, soil mineral composition, texture, humous and water content, canopy architectural parameters (leaf inclination, etc.), plant content of biochemical compounds. Class information and parameter quantification of the Earth's land surface is sometimes referred to as "Properties" in the following text.

One challenge of any AI approach is the need for training data to define the neuronal network (in case of Deep Learning) or the rules and models in case of machine learning algorithms. Especially Deep Learning models often have a deep and complex structure and, hence, require a multitude of training data [2]. Training data is provided to the AI training in general as in-situ data (ground truth) which means properties measured at defined locations and times using measurement devices or classified by humans at field visits, e.g. in case of land use or crop type.

Sometimes, remote sensing images are just labelled by humans by visual interpretation, as for example in case of recognition of irrigation cycles [3].

If the quality of the training data provided to the AI training is very good and the data quantity is large enough to cover the full range of parameter values realized for all possible land surface heterogeneities, soil and plant varieties and appearances and illumination conditions, the quality of the trained AI algorithms is very high, generally.

This is, however, very rarely the case, since high quality and quantity training data is missing. Generally, AI approaches are reduced in accuracy, when transferring the model from one geographical region to another or when training data taken from a certain time shall be used for a different (e. g. later) time.

In this context, a temporal and spatial de-correlation depends on the property's temporal and spatial dynamics. A temporal de-correlation may cover days (e.g. water properties) up to years (e.g. geological maps), but often extends over weeks according to the seasonal dynamics on Earth. This temporal decorrelation largely invalidates the use of trained AI algorithms outside the time and area in which the ground truth data has been collected for their training.

Having the above-described temporal and spatial de-correlation and the resulting reduction of data accuracy in mind, it was an object of the invention to overcome the prior art drawbacks. In particular, it was an object of the invention that the classification and quantification of properties of the earth land surface based on information extraction from remotely sensed images using Artificial Intelligence (AI) is improved. Moreover, another object of the invention was that new classification properties and their quantification can be determined and derived from multispectral remotely sensed images or microwave data.

The above and other objects can surprisingly be achieved by the Artificial Intelligence (AI) algorithm training method of the invention and by the use of hyperspectral data analyses for training Artificial Intelligence (AI) algorithms for remote sensing image analyses.

By providing training data that were derived unsupervised (without human interpretation and direct measurement) from hyperspectral data using physical principles, the training of the AI model is significantly improved.

Hence, the invention relates to a method of training Artificial Intelligence (AI) algorithms for remote sensing image analyses by hyperspectral earth land surface property data analyses, said method comprising the steps of
a. selecting an earth land surface property to be analysed;
b. subjecting the selected earth land property to unsupervised measurements of said property by using a hyperspectral image obtained from a defined area X of the earth land surface at a defined time Y by a remote sensing hyperspectral radiance measurement instrument;
c. converting the obtained hyperspectral radiance measurement data into at least one set of data of said selected property using the appropriate unsupervised retrieval algorithm using physical based retrieval methods, wherein each property data set i is further assigned a geographic location X*ᵢ* and time of observation Y*ᵢ*;
d. using the at least one property data set obtained in step (c) as training data for training the AI algorithm for multispectral images or microwave images of the defined area X; and
e. applying the thus trained AI algorithm for the property to multispectral or microwave remote sensing data sets of a geographical area equal to, or larger than, the defined area X and for a time span equal to or larger than the defined time span Y.

Preferred embodiments of the method of the invention are claimed in dependent claims 2 to 5.

The invention also relates to a use of hyperspectral earth land surface property data for training Artificial Intelligence (AI) algorithms to be applied to data obtained from remote sensing instruments in order to improve the instruments' performance in retrieving said property data.

Preferred embodiments of the use of the invention are claimed in dependent claims 7 to 10.

In the following, the invention is disclosed and explained in more detail by referring to preferred embodiments and to specific examples. Neither the preferred embodiments nor the specific examples are presented with the aim of, or should be construed to serve for, restricting the invention. To the contrary: Any reference to preferred embodiments and to specific examples serves to better explain the invention exemplarily in a non-restricting manner in order to improve an understanding of the invention.

The term "earth land surface" as used in the specification and claims is understood to mean, in its broadest sense, the surface of the Earth which may consist of variable surface types like soils, minerals, vegetation, man-made materials, snow and ice and water bodies, but is not restricted to these surface types.

The term "earth land surface property" as used in the specification and claims is understood to mean, in its broadest sense, any property of the earth land surface with respect to either classification (e. g. characterization of a class type like land use or crop type or a physical variable) or quantification (e. g. quantity of a biochemical and/or biophysical property type like mineral composition or chlorophyll content or water content), but is not restricted to these properties of the earth land surface.

The term "earth land surface property data" or "earth land surface property values" as used in the specification and claims is understood to mean, in its broadest sense, any data or values of a property of the earth land surface with respect to either classification (e. g. characterization of a class type like land use or crop type or a physical variable) or quantification (e. g. quantity of a biochemical and/or biophysical property type like mineral composition or chlorophyll content or water content), but is not restricted to these property data.

The terms "data" and "values" therein are used as synonyms in the present description and claims.

The term "multispectral (radiance) measurement" as used in the specification and claims is understood to mean, in its broadest sense, a measurement of radiance reflected from, or backscattered by, the earth land surface, said measurement being based on selected non-continuous spectral bands, but is not restricted to any specific radiance measurement.

The term "hyperspectral (radiance) measurement" as used in the specification and claims is understood to mean, in its broadest sense, a contiguous measurement of radiance reflected from the earth land surface, said reflected radiance extending over a wide spectral range of, for example, 400 nm to 2500 nm, and said measurement(s) may use a high spectral sampling rate of, for example, between 2 nm and 50 nm, but is not restricted to any specific radiance measurement and/or sampling rate.

Hence, without restricting the invention, multispectral measurements and hyperspectral measurements differentiate from each other by the number of spectral bands and the coverage of a limited, or respectively broad, spectral range without or respectively with discrete bands.

The term "remote sensing instrument" as used in the specification and claims is understood to mean, in its broadest sense, a sensor that is capable of measuring radiance that was reflected from, or backscattered by, any earth land surface, whereby said sensor is not in direct contact to the said earth land surface measured, and whereby the sensor may be mounted spaceborne or airborne, wherein "airborne" includes "airborne with a large distance away from the earth land surface" and "airborne with just a few decimetres above the earth land surface", without being restricted to any of these alternatives.

The term "remote sensing data" or "remote sensing values" as used in the specification and claims is understood to mean, in its broadest sense, any data or values measured by at least one remote sensing instrument or measured by a plurality of remote sensing instruments, for example (but without being restricted to this preferred embodiment) by at least one remote sensing instrument, said remote sensing instrument(s) being capable of measuring radiance reflected from, emitted from or backscattered by, any earth land surface.

The term "labeled training data" as used in the specification and claims is understood to mean, in its broadest sense, data from remote sensing instruments which are assigned to a land surface property and a geographic location X.

The term "Artificial Intelligence (AI) algorithm training" as used in the specification and claims is understood to mean, in its broadest sense, a provision of labeled training data to a machine learning algorithms or to a Deep Learning Network.

The term "unsupervised" as used in the specification and claims in the context of measurements, algorithms, data etc. is understood to mean, in its broadest sense, an autonomous approach or procedure, e. g. without human interpretation and direct measurement, while the term "supervised" as used in the specification and claims in the context of measurements, algorithms, data etc. is understood to mean, in its broadest sense, an approach or procedure controlled or initiated by human action or under human supervision, e. g. with human interpretation and/or direct measurement.

The method of present invention is now described in further detail by referring to single features thereof each of which might be realized alone, i. e. as a single feature, or may be realized commonly with or in combination with or together with one other feature of the invention (as referred to below) or with two other features of the invention (as referred to below) or with three or more, or even with all, other features of the invention (as referred to below), without being restricted to one sole feature or to a specific combination of two or several or all other features disclosed below.

Similarly, the use of present invention is now described in further detail by referring to single features thereof each of which might be realized alone, i. e. as a single feature, or may be realized commonly with or in combination with or together with one other feature of the invention (as referred to in the following) or with two other features of the invention (as referred to below) or with three or more, or even with all, other features of the invention (as referred to below), without being restricted to one sole feature or to a specific combination of two or several or all other features disclosed below.

Furthermore, the method of the invention or the use of the invention may be further explained by referring to specific or preferred embodiments of the method according to the invention or to specific or preferred embodiments of the use according to the invention or may even be exemplified by specific examples of the method of the invention and / or by specific examples of the use of the invention. Neither the specific or preferred embodiments nor the specific or preferred examples should be construed to restrict the invention, but only serve for providing a better understanding of the invention as a whole.

Hyperspectral remote sensing instruments continuously cover a large spectral region of radiance reflected from the earth surface with a large number of narrow spectral bands. Preferably, hyperspectral remote sensing instruments continuously cover a spectral range of radiance of typically from 400 nm to 2500 nm reflected from the earth surface. In further preferred embodiments, the narrow spectral bands cover wavelength ranges of from 2 nm to 50 nm, more preferably wavelength ranges of about 10 nm, most preferably wavelength ranges of 10 nm.

A fine and continuous measurement of absorption features of the earth surface materials by hyperspectral remote sensing instruments allows, in comparison with multispectral sensors or microwave sensors, to vastly improve the accuracy and range of quantitative measurement of certain properties of the earth's surface (e.g. leaf area, soil organic carbon content, plant chlorophyll content, plant/leaf-manifesting plant diseases,) to a level, which is comparable with ground truth. Further, since absorption feature measurement of the earth surface materials by hyperspectral remote sensing instruments uses physical absorption features and scattering properties, the retrieval of the respective property can be done unsupervised, i. e. based on radiative transfer simulations or absorption feature identification.

In addition, hyperspectral imagers allow to quantitatively determine new Properties (e.g. plant nitrogen content, mineral abundances, identification of man-made materials), for which multispectral sensors or microwave sensors deliver a signal, which is too weak to be meaningful for their quantitative extraction from the data using the classical, non-AI approaches to data processing. Hyperspectral imagers are not yet operationally available from space with global and frequent observations.

The invention is to use results of large scale physically and statistically based unsupervised analyses of hyperspectral data to create large training sets of superior quality data of earth surface properties. They are used to train AI algorithms applied to data from operational, multispectral or microwave remote sensing instruments with the required temporal resolution and the needed geographical representativity.

The purpose is to substitute the sparse ground truth measurements of a land surface property with the large number of hyperspectral derived properties in training AI-algorithms on data from operational multispectral or microwave sensors in order to improve their performance in retrieving the same property.

At the same time, the described procedure can be used for all land surface properties, which can be quantified using hyperspectral images, but for which a signal exists in the multispectral or microwave image data, which is too weak for the property to quantitatively be determined from multispectral or microwave data using classical data retrieval approaches.

In accordance with the invention, the present method is a method of training Artificial Intelligence (AI) algorithms for remote sensing data analyses. Specifically, the present method is a method of training AI algorithms for remote sensing image data analyses. In accordance with the AI algorithm training method, hyperspectral earth land surface property data analyses are used, thereby improving the quality of the training data and, hence, the quality of the AI training, to define the rules and models of machine learning algorithms or the Deep Learning neuronal network.

In a first step of the method of training AI algorithms for remote sensing (image) data analyses, an earth land surface property to be analysed is selected. A selection of an earth land surface property depends, for example and without any restriction, on which earth land surface property is of interest for a further consideration, scientific approach and/or measurement. Selectable earth land surface properties may be arbitrary and may be selected from a large number.

In preferred embodiments of the invention which embodiments might be realized alone or might be realized in combination with any one other feature of the invention or with two or several other features of the invention or with all other features of the invention, without restricting the invention, said earth land surface property may comprise a selection of one or more of the group selected from specific leaf area, leaf nitrogen content, nitrogen uptake, fire disturbances, soil organic carbon content, plant/leaf chlorophyll content, plant diseases, chlorophyll content in water bodies, yellow substances in water bodies, mineral abundance in soils, humous content in soil, man-made materials like roof materials, earth surface artificial materials like road construction materials and plastics. Further earth land surface properties may be selected and combined with others, if required, and the invention is not restricted to those mentioned above.

In accordance with the invention, in a method step subsequent to selecting an earth land surface property to be analysed, the selected earth land surface property is subjected to unsupervised measurements of said property. For such unsupervised measurements of said property to be analysed, in accordance with the invention, a hyperspectral image obtained from a defined area X of the earth land surface at a defined time Y is used, and the hyperspectral image is obtained by at least one remote sensing hyperspectral radiance measurement instrument.

In accordance with the method of the invention, one remote sensing radiance measurement instrument is used, or two or several remote sensing radiance measurement instruments are used. The use of a plurality of remote sensing radiance measurement instruments is preferred.

In preferred embodiments of the invention which embodiments might be realized alone or might be realized in combination with any one other feature of the invention or with two or several other features of the invention or with all other features of the invention, without restricting the invention, a preferred embodiment of the at least one remote sensing radiance measurement instrument, or of the one remote sensing radiance measurement instrument, is a sensor that is capable of measuring radiance that was reflected from, or backscattered by, any earth land surface, whereby said sensor is not in direct contact to the said earth land surface the radiance of which is measured. In even more preferred embodiments of the method of the invention, but not restricted to those, the sensor may be "mounted" or may be "present" spaceborne or airborne. Therein, "airborne" includes "airborne with a large distance away from the earth land surface" and "airborne with just a short distance, for example and without restriction of the invention, a few decimetres above the earth land surface". The method of the invention is not restricted to any of these alternatives.

Even further preferred, in accordance with the invention, are methods wherein the one or the plurality of remote sensing radiance measurement instrument(s) used is/are one or a plurality of remote sensing hyperspectral radiance measurement instruments. Thus, the radiance measured by this instrument or by these instruments includes, or may even consist of, radiance extending over a wide spectral range of, for example, 400 nm to 2500 nm, and said measurement(s) are using a high spectral sampling rate of, for example, between 2 nm and 50 nm, preferably a high spectral sampling range of about 10 nm, more preferably a high spectral sampling range of 10 nm.

In accordance with the invention, in a method step subsequent to the step of unsupervised (i. e. autonomous) measurement of the selected earth land surface property, the obtained hyperspectral radiance measurement data or values are converted into at least one set of data of said selected earth land surface property using an appropriate unsupervised retrieval algorithm using physical based retrieval methods. The conversion step according to the invention is finalized by assigning the converted property value set (or data set) or each converted property value set (or property data set) *i* a geographic location of observation X*ᵢ* and a time of observation Y*ᵢ*.

In accordance with the invention, in a method step subsequent to the step of converting the obtained hyperspectral radiance measurement values or data into at least one set of values of said selected property, the property data set(s) obtained in the previous step are used for labelling training data for training the Artificial Intelligence (AI) algorithm for multispectral or microwave images of the defined area X.

By the described method including using the obtained property data set(s) for labelling training data for training the AI algorithm for multispectral or microwave images of the defined area X, the classification and quantification of properties of the earth land surface based on information extraction from remotely sensed images using Artificial Intelligence (AI) is considerably improved. Due to the good quality of the training data provided to the AI training and due to the considerably larger data quantity, it is possible to cover the full range of parameter values realized for all possible land surface heterogeneities, soil and plant varieties and appearances and illumination conditions, a surprisingly high quality improvement of the trained AI algorithms is achieved.

In further embodiments of the method of the invention which embodiments might be realized alone or might be realized in combination with any one other feature of the invention or with two or several other features of the invention or with all other features of the invention, without restricting the invention, physically and statistically based unsupervised analyses of hyperspectral data are used as the earth land surface property data for training the AI algorithm for multispectral images or microwave images of the defined area.

In accordance with these preferred embodiments of the invention, this is advantageous, because large data sets of training data are generated autonomously and efficiently without human interaction. Due to the good quality and high quantity of the training data provided to the AI training, it is possible to cover the full range of parameter values realized for all possible land surface heterogeneities, soil and plant varieties and appearances and illumination conditions, and a surprisingly high quality improvement of the trained AI algorithms and of the resulting AI algorithm training is achieved.

In further embodiments of the method of the invention which embodiments might be realized alone or might be realized in combination with any one other feature of the invention or with two or several other features of the invention or with all other features of the invention, without restricting the invention, data quantifiable using hyperspectral images, but showing a signal in multispectral image data or microwave image data too weak for the property to quantitatively be determined using classical (non-AI) data retrieval approaches, are used as the earth land surface property data for training the AI algorithm for multispectral images or microwave images of the defined area.

This is advantageous because, surprisingly, when making use, in training AI algorithms, of a large number of hyperspectral-derived property data for substituting the sparse ground truth measurement data of these earth land surface properties showing too weak multispectral or microwave image data for a quantitative determination, such method of AI algorithm training allows employing operational multispectral or microwave sensors and improving their performance in retrieving these earth land surface property data after AI algorithm training with the hyperspectral data based on descriptive trained AI algorithms.

In accordance with the invention, in a further method step subsequent to the step of using the property data or property value set(s) as training data for training the AI algorithm, the thus trained AI algorithm for said selected property is applied to multispectral or microwave remote sensing data sets of a representative geographical area equal to, or larger than, the defined area X and for a valid time span equal to, or larger than, the defined time span Y.

As an example, it might be mentioned (without intending a restriction of the invention), that training data required in spring should only be applied to train the AI algorithm with multispectral or microwave data measured in spring.

In further embodiments of the method of the invention which embodiments might be realized alone or might be realized in combination with any one other feature of the invention or with two or several other features of the invention or with all other features of the invention, without restricting the invention, data measured by and obtained from operational multispectral or microwave remote sensing instruments with the needed geographic representativity and required temporal resolution are used as the data to which the trained AI algorithms are applied.

Surprisingly, this preferred embodiment of the method of the invention allows a higher temporal resolution and a larger scale monitoring than using hyperspectral data alone.

The objects of the invention are also achieved by a use of hyperspectral earth land surface property data for training Artificial Intelligence (AI) algorithms to be applied to data obtained from remote sensing instruments in order to improve the instruments' performance in retrieving said property data. In accordance with the use of hyperspectral earth land surface property data analyses, the quality of the training data and, hence, the quality of the AI training is improved, to define the rules and models of machine learning algorithms or the Deep Learning neural network.

When using hyperspectral earth land surface property data for training Artificial Intelligence (AI) algorithms, a selection of an earth land surface property depends, for example and without any restriction, on which earth land surface property is of interest for a further consideration, scientific approach and/or measurement. Selectable earth land surface properties may be arbitrary and may be selected from a large number.

In preferred embodiments of the invention which embodiments might be realized alone or might be realized in combination with any one other feature of the invention or with two or several other features of the invention or with all other features of the invention, without restricting the invention, said earth land surface property may comprise a selection of one or more of the group selected from specific leaf area, leaf nitrogen content, nitrogen uptake, fire disturbances, soil organic carbon content, plant/leaf chlorophyll content, plant diseases, chlorophyll content in water bodies, yellow substances in water bodies, mineral abundance in soils, humous content in soil, man-made materials like roof materials, earth sur-face artificial materials like road construction materials and plastics. Further earth land surface properties may be selected and combined with others, if required, and the invention is not restricted to those mentioned above.

In accordance with the use of hyperspectral earth land surface property data for training AI algorithms, such AI algorithms are to be applied to remote sensing data, specifically remote sensing image data, obtained from remote sensing instruments. One specific purpose of such applications is an improvement of the remote sensing instruments' performance in retrieving such earth land surface property data.

In accordance with the use of the invention, one remote sensing radiance measurement instrument might be used, or two or several remote sensing radiance measurement instruments might be used. The use of a plurality of remote sensing radiance measurement instruments is preferred.

In preferred embodiments of the use of the invention which embodiments might be realized alone or might be realized in combination with any one other feature of the use of the invention or with two or several other features of the use of the invention or with all other features of the use of the invention, without restricting the invention, there may be used, as a preferred embodiment of the at least one remote sensing radiance measurement instrument, a sensor that is capable of measuring radiance that was reflected from, or backscattered by, any earth land surface, whereby said sensor used is not in direct contact to the said earth land surface the radiance of which is measured. In even more preferred embodiments of the use of the invention, but not restricted to those, the sensor may be mounted spaceborne or airborne, wherein "airborne" includes "airborne with a large distance away from the earth land surface" and "airborne with just a short distance, for example and without restriction of the invention, a few decimetres above the earth land surface". The use of the invention is not restricted to any of these alternatives.

Even further preferred, in accordance with the invention, is a use of said hyperspectral earth land surface property data for AI training purposes, wherein the one or the plurality of remote sensing radiance measurement instrument(s) used is/are one or a plurality of remote sensing hyperspectral radiance measurement instruments. Thus, the radiance measured by using these instruments includes, or may even consist of, radiance extending over a wide spectral range of, for example, 400 nm to 2500 nm, and said measurement(s) are using a high spectral sampling rate of, for example, between 2 nm and 50 nm, preferably a high spectral sampling range of about 10 nm, more preferably a high spectral sampling range of 10 nm.

In alternative embodiments of the use of the invention, which embodiments might be realized alone or might be realized in combination with any one other feature of the use of the invention or with two or several other features of the use of the invention or with all other features of the use of the invention, without restricting the invention, physically and statistically based unsupervised analyses of hyperspectral data are used as the earth land surface property data for training the AI algorithm for multispectral images or microwave images of the defined area.

In accordance with these preferred embodiments of the use of the invention, this is advantageous, because such use is capable of generating, autonomously and efficiently without human interaction, large data sets of training data. Due to the good quality and high quantity of the training data provided to the AI training by such a preferred use of the invention, it is possible to cover the full range of parameter values realized for all possible land surface heterogeneities, soil and plant varieties and appearances and illumination conditions. Hence, a surprisingly high quality improvement of the trained AI algorithms and of the resulting AI algorithm training is achieved.

In further embodiments of the use of the invention which embodiments might be realized alone or might be realized in combination with any one other feature of the use of the invention or with two or several other features of the use of the invention or with all other features of the use of the invention, without restricting the invention, the earth land surface property data used are data quantifiable using hyperspectral images, but show a signal in multispectral or microwave image data too weak for the property to quantitatively be determined from multispectral or microwave image data when using classical (non-AI) data retrieval approaches.

Surprisingly, using, in training AI algorithms, a large number of hyperspectral-derived property data for substituting the sparse ground truth measurement data of these earth land surface properties showing too weak multispectral or microwave image data for a quantitative determination when using classical (non-AI) data retrieval approaches, allows making use of operational multispectral or microwave sensors and improving their performance in retrieving these earth land surface property data after AI algorithm training with the hyperspectrally derived training data.

In further embodiments of the use of the invention which embodiments might be realized alone or might be realized in combination with any one other feature of the use of the invention or with two or several other features of the use of the invention or with all other features of the use of the invention, without restricting the invention, the data to which the trained AI algorithms are applied are data from operational multispectral or microwave remote sensing instruments with the needed geographic representativity and the required temporal resolution.

The following examples are not presented with the aim of restricting the invention, but are presented for enabling a better understanding of the invention along the exemplifying description.

### Example 1

A hyperspectral airborne image acquisition over an urban area is used to classify the roof material based on specific absorption or scattering features of this roof material. With such a classification, e.g. tiles, metal, bitumen, synthetic, gravel, concrete, and vegetation roofs can be classified with high accuracy [4]. These classified and material-labelled roof data are used as input data for training a Deep Learning neuronal network using multispectral or microwave data from an operational satellite mission (e. g. Sentinel-2) that covers the whole large urban area and not just the hyperspectral flight strip. After this training, the neuronal network can be applied to the whole urban area and the multispectral and microwave data and roof materials are provided as large scale maps.

### Example 2

Another example is the use of a New Space hyperspectral sensor with dedicated mapping capabilities, e. g. for mapping roof materials, dry matter of crops or organic material in soils. Sensors of this type are relatively small and create much lower costs than classically concepted Earth Observation missions like CHIME [5]. However, they cover a limited spatial area, only, with a low temporal frequency. However, they could be used for defining the training data sets for the operational multispectral or microwave missions.

The invention was described above as such generally and, in addition, by referring to preferred embodiments and further preferred examples. The invention, however, is not restricted by and to the preferred embodiments and examples, but is defined broadly by the claims which follow.

### Citations

[1] Zhu, X.X.; Tuia, D.; Mou, L.; Xia, G.-S.; Zhang, L.; Xu, F.; Fraundorfer, F. Deep learning in remote sensing: A comprehensive review and list of resources. IEEE Geoscience and Remote Sensing Magazine 2017, 5, 8-36, doi:10.1109/MGRS.2017.2762307.
[2] Qiangqiang Yuan, Huanfeng Shen, Tongwen Li, Zhiwei Li, Shuwen Li, Yun Jiang, Hongzhang Xu, Weiwei Tan, Qianqian Yang, Jiwen Wang, Jianhao Gao, Liangpei Zhang, Deep learning in environmental remote sensing: Achievements and challenges, Remote Sensing of Environment, Volume 241, 2020, 111716, ISSN 0034-4257, https://doi.org/10.1016/j.rse.2020.111716.
[3] Graf, L., Bach, H., Tiede, D. (2020): Semantic Segmentation of Sentinel-2 Imagery for Mapping Irrigation Center Pivots, Remote Sensing, 12(32):3937. https://doi.org/10.3390/rs12233937
[4] Heldens, W., 2019, Use of airborne hyperspectral data and height information to support urbanmicro climate characterisation, Dissertation, https://elib.dlr.de/64645/1/phd heldens ONLINE.pdf
[5] Copernicus Hyperspectral Imaging Mission for the Environment - Mission Requirements Document," ESA/ESTEC, 23 July 2019, URL: http://esamultimedia.esa.int/docs/EarthObservation/Copernicus CHIME MRD v2.1 Issued20190723.pdf

## Claims

1. A method of training Artificial Intelligence (AI) algorithms for remote sensing image analyses by hyperspectral earth land surface property data analyses, said method comprising the steps of
a. selecting an earth land surface property to be analysed;
b. subjecting the selected earth land property to unsupervised measurements of said property by using a hyperspectral image obtained from a defined area X of the earth land surface at a defined time Y by a remote sensing hyperspectral radiance measurement instrument;
c. converting the obtained hyperspectral radiance measurement data into at least one set of data of said selected property using the appropriate unsupervised retrieval algorithm using physical based retrieval methods, wherein each property data set i is further assigned a geographic location X*ᵢ* and time of observation Y*ᵢ* .
d. using the at least one property data set obtained in step (c) as training data for training the AI algorithm for multispectral images or microwave images of the defined area X; and
e. applying the thus trained AI algorithm for the property to multispectral or microwave remote sensing data sets of a geographical area equal to, or larger than, the defined area X and for a time span equal to or larger than the defined time span Y.

2. The method as claimed in claim 1, wherein said earth land surface property comprises a selection of one ore more of the group selected from specific leaf area, leaf nitrogen content, nitrogen uptake, fire disturbances, soil organic carbon content, plant/leaf chlorophyll content, plant diseases, chlorophyll content in water bodies, yellow substances in water bodies, mineral abundance in soils, humous content in soil, man-made materials like roof materials, earth surface artificial materials like road construction materials and plastics.

3. The method as claimed in claim 1 or claim 2, wherein physically based unsupervised analyses of hyperspectral data are used as the earth land surface property data.

4. The method as claimed in claim 1 or claim 2, wherein data quantifiable using hyperspectral images, but showing a signal in multispectral or microwave image data too weak for the property to quantitatively be determined using classical (non-AI) data retrieval approaches, are used as the earth land surface property data.

5. The method as claimed in any one or more of the claims 1 to 4, wherein data from operational multispectral or microwave remote sensing instruments with the needed geographic representativity and required temporal resolution are used as the data to which the trained AI algorithms are applied.

6. A use of hyperspectral earth land surface property data for training Artificial Intelligence (AI) algorithms to be applied to data obtained from remote sensing instruments in order to improve the instruments' performance in retrieving said property data.

7. The use of claim 6, wherein said hyperspectral earth land surface property comprises a selection of one or more of the group selected from specific leaf area, leaf nitrogen content, nitrogen uptake, fire disturbances, soil organic carbon content, plant/leaf chlorophyll content, plant diseases, chlorophyll content in water bodies, yellow substances in water bodies, mineral abundance in soils, humous content in soil, man-made materials like roof materials, earth surface artificial materials like road construction materials and plastics.

8. The use of any of the claims 6 or 7, wherein the hyperspectral earth land surface property data used are physically and statistically based analyses of hyperspectral data.

9. The use of any of the claims 6 or 7, wherein the hyperspectral earth land surface property data used are data quantifiable using hyperspectral images, but showing a signal in multispectral or microwave image data too weak for the property to quantitatively be determined using classical (non-AI) data retrieval approaches.

10. The use of any of the claims 6 or 9, wherein the data to which the trained AI algorithms are applied are data from operational multispectral or microwave remote sensing instruments with the needed geographic representativity and the required temporal resolution.
